(19) Europäisches Patentamt
European Patent Office
Office européen des brevets

(11) **EP 4 651 135 A1**

(12) **EUROPEAN PATENT APPLICATION**

(43) Date of publication:
**19.11.2025  Bulletin 2025/47**

(21) Application number: **24305740.3**

(22) Date of filing: **13.05.2024**

(51) International Patent Classification (IPC):
**G11C 5/14** *(2006.01)*        **H02M 3/07** *(2006.01)*
**G06F 21/55** *(2013.01)*       **H02M 1/32** *(2007.01)*
**G11C 7/24** *(2006.01)*        **G11C 16/30** *(2006.01)*
**G11C 16/22** *(2006.01)*

(52) Cooperative Patent Classification (CPC):
**G11C 5/145; G06F 21/554; G06F 21/75;**
**G06F 21/79; G11C 5/143; G11C 7/24; H02M 3/07;**
**H02M 3/075;** G11C 16/22; G11C 16/30; H02M 1/32

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **THALES DIS FRANCE SAS**
**92190 Meudon (FR)**

(72) Inventors:
• **NAURA, David**
**13100 Aix en Provence (FR)**

• **DOUTREMER, Thomas**
**13590 MEYREUIL (FR)**
• **MIGAIROU, Vincent**
**13530 TRETS (FR)**
• **LAPEYRE, Sébastien**
**13090 AIX EN PROVENCE (FR)**

(74) Representative: **Bricks, Amélie**
**Thales Dis France SAS**
**Intellectual Property Department**
**6, rue de la Verrerie**
**92190 Meudon (FR)**

(54) **CHARGE PUMP, NON-VOLATILE MEMORY AND INTEGRATED CIRCUIT INCLUDING SAID CHARGE PUMP**

(57)    The invention relates to a charge pump comprising a tank capacitor ($C_T$) filled by at least one pumping stage (310) which is driven by a phase generator (320) controlled by a regulator circuit (330) connected to said tank capacitor ($C_T$). The regulator circuit (330) provides a control signal (REGOK) in an active or inactive state for activating or for stopping the phase generator as a function of the voltage of the tank capacitor. The charge pump circuit further comprises a measuring circuit (351) and a comparator circuit (352). The measuring circuit (351) receives the control signal (REGOK) and provides a time value indicating the time since the last triggering of the control signal (REGOK) into the active state. The comparator circuit (352) is connected to measuring circuit (351) and provides an alarm signal (ALARM) when the time value is higher than a threshold value (Tmax).

Figure 6

## Description

Technical Field

The invention relates to a charge pump, to a non-volatile memory and to an integrated circuit including said charge pump.

Background Art

Secure integrated circuits are more and more used today. As an example, secure integrated circuit are used for any product needing a secure element like smart cards, smartphones, computers, or any communicating electronic device that should be securely connected. Security data, including password but also secure programs for making strong authentications are stored in a non-volatile memory that is preferably programmable and erasable, like Flash memories or EEPROMs (Electrically Erasable Programmable Read Only Memory). The non-volatile memory is embedded into a microcontroller or a System-on-Chip (SoC) component making a verification of password in such a way the password never goes out of the component. Nevertheless, there are some methods for retrieving the password from such component.

One method consists in a direct access to the component after removing protection resin from the component. Once the component is naked, the memory can be accessed by thin probe, by laser, or by electromagnetic radiation. In such a way to avoid a direct reading of the memory, the memory can be scrambled or encoded.

Even if the memory is scrambled or encoded, a method, known as "fault attack", consists in altering the reading or the writing into the memory in such a way as to cause some faults during the running of a secure program for locating where are the sensitive data or for deducing an algorithm. An attack can be made at different locations in the memory. In particular, the attack can be made on a component that can be easily identified and which can certainly introduce errors.

A low voltage non-volatile memory comprises floating gate transistors which need to be polarized with voltages higher than the supply voltage of the memory to perform erasing, writing, and reading operations. The needed voltages can be provided by one or more charge pumps which are easily located due to large capacitors forming a specific pattern. In addition, if an inaccurate voltage is provided the operation is wrongly made for all the memory cells.

There is a need to detect an attack on a charge pump for integrated circuit including a non-volatile memory containing sensitive data.

Summary of the Invention

The invention aims to detect an abnormal functioning of a charge pump of a memory circuit by measuring the charging time between a minimum regulation voltage and a maximum regulation voltage. If the charging time is too long, an alarm signal is raised. More particularly, the invention provides a charge pump comprising a tank capacitor filled by at least one pumping stage which is driven by a phase generator controlled by a regulator circuit connected to said tank capacitor. Said regulator circuit provides a control signal in an active state for activating the phase generator or in an inactive state for stopping the phase generator as a function of the voltage of the tank capacitor. The charge pump circuit further comprises a detection circuit comprising a measuring circuit and a comparator circuit. The measuring circuit receives the control signal and provides a time value indicating the time since the last triggering of the control signal into the active state. The comparator circuit is connected to the measuring circuit for receiving the time value and providing an alarm signal when the time value is higher than a threshold value.

According to a particular embodiment, the charge pump can receive a switching signal for activating or deactivating the charge pump. The switching signal can disable the detection circuit when the charge pump is deactivated.

Preferentially, the measuring circuit can be a counter clocked by a clock signal, said counter being reset when the control signal is inactive and counting when the control signal is active.

According to a particular embodiment, the switching signal can disable and reset the counter when the charge pump is deactivated.

The detection circuit can comprise a non-volatile register memorizing the threshold value, wherein the threshold value is higher than a maximum time for charging the tank capacitor from a minimum regulation voltage to a maximum regulation voltage in normal conditions.

The invention also provides a non-volatile memory circuit comprising non-volatile memory cells that can be polarized with voltage higher than a power supply voltage. Said non-volatile memory circuit comprises at least one charge pump according to the invention.

Preferentially, the non-volatile memory circuit can comprise as many charge pumps as there are needed voltages higher than the power supply.

The invention further provides an integrated circuit comprising a non-volatile memory circuit according to the invention and at least one processing unit. The non-volatile memory circuit is connected to the processing unit for providing the alarm signal, and the processing unit is configured for rebooting when the alarm signal is provided.

According to another aspect, the invention provides a method for detecting an attack of an integrated circuit comprising a non-volatile memory comprising a plurality of memory cells and at least one charge pump for providing a polarization voltage to the memory cells, said polarization voltage being higher than a power supply and being regulated between a minimum regulation voltage and a maximum regulation voltage. The method comprises the steps of:

- measuring a charging time elapsed since last time the polarization voltage was equal to the minimum regulation voltage,
- comparing the measured charging time with a threshold value and providing an alarm signal when the charging time is higher than the threshold value.

Preferentially, the threshold value can be measured and stored in a non-volatile register after the manufacturing of the integrated circuit during a configuration step in which the measured threshold value is equal to a time for charging the charge pump from the minimum regulation voltage to the maximum regulation voltage with a maximum current drawn from the charge pump.

According to one embodiment, the integrated circuit can comprise a processing unit connected to the non-volatile memory, and the processing unit can be rebooted when the alarm signal is provided.

Brief description of the Drawings

The invention will be detailed with reference to the annexed drawings in which:

Figure 1 shows an integrated circuit including a non-volatile memory,
Figure 2 shows an example of charge pump according to prior art,
Figure 3 is a timing chart illustrating the functioning of a charge pump,
Figure 4 is a timing chart illustrating a first type of attack on a charge pump,
Figure 5 is a timing chart illustrating a second type of attack on a charge pump,
Figure 6 shows a charge pump according to the invention,
Figure 7 is a timing chart illustrating the detection of an attack.

Detailed Description of the invention

In such a way to simplify the present specification, a same reference is used on different drawings for designing a same element or an equivalent element. In addition, the memory is not completely detailed for avoiding too much explanation without interest for the invention.

In the present document, it will be made reference to active signal, inactive signal, high level, low level, level "1" and level "0". As well known by a person skilled in the art, levels "0" or "1" and a low or a high level can arbitrarily correspond to an active or inactive levels depending on the kind of transistor used or of a simple choice of the designer. So, changing a high level to a low level or a level "1" to a level "0" has no importance in relation with the invention.

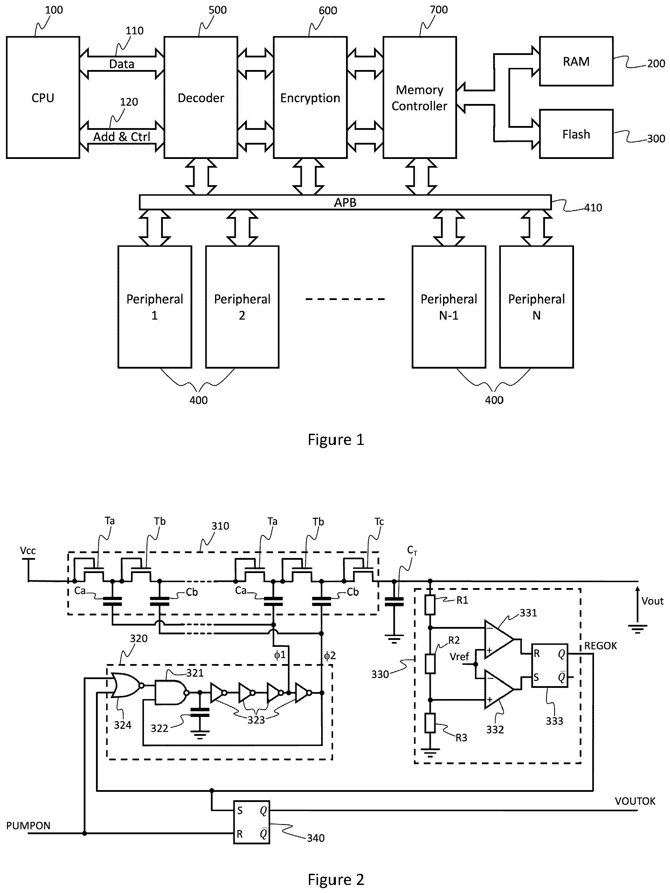

An integrated circuit of a microcontroller type, which can be also a System-on-Chip (SOC), is shown on figure 1 for showing the context in which the invention is used. The integrated circuit of figure 1 comprises a central processing unit (CPU) 100 that may include one or more microprocessor cores. The CPU 100 comprises a data bus 110, and an address and control bus 120 for communicating with memories 200 and 300 and with peripheral units 400. For securely managing the memories 200 and 300 or the peripheral units 400, the integrated circuit can comprise a decoder circuit 500, an encryption circuit 600 and a memory controller 700, both connected to the data bus 110 and the address and control bus 120 and to an application peripheral bus (APB) 410 for connecting the peripheral units 400.

Typically, control signals and address format depend on the memory type, and it is necessary to adapt them to be transparent for the CPU. The memory controller 700 can be used for addressing each memory 200 or 300 with address and control signals adapted to each type of memory that can be volatile memory 200, for example of RAM type, or non-volatile memory, for example of Flash type.

The encryption circuit 600 can be used for secure circuit, it can be of different type and can be controlled by the CPU for encrypting the data transmitted to the memories or to the peripheral units or for scrambling the addresses of the data into one memory. The encryption circuit 600 can be also transparent if no security is required for the transferred data.

The decoder circuit 500 can be used for decoding some control signals of the CPU in such a way to address the memories 200 or 300, one peripheral unit 400, or to control the encryption circuit 600 or for establishing a data transfer between one of the memories 200 or 300 and one peripheral unit 400, eventually through the encryption circuit 600.

Many other architectures are possible using different communication path between a CPU, its memories, and its peripherals units. Figure 1 showing only one example amongst many other possibilities, many functional variants of the decoder circuit 500, the encryption circuit 600, and the memory controller 700 are possible and they can be also optional. For the invention, one important thing is that a CPU 100 is connected directly or indirectly to a non-volatile memory 300 in view to read or write data that can be encrypted or scrambled or not. According to the invention the non-volatile memory 300 is capable to send back an alarm signal to the CPU 100 or to any of the intermediate components for indicating a reading or writing operation has been wrongly performed.

The non-volatile memory 300 is commonly a memory using floating gate transistors in the memory cells. A floating gate transistor is a MOSFET type transistor having an insulated floating gate between the gate of the MOSFET and the substrate forming the channel of said transistor. Said floating gate can store charges for a long period of time and the charges contained in the floating gate modify the reaction of the floating gate transistor to the gate voltage. Fowler-Nordheim tunneling, and hot-carrier injection mechanisms are used to modify the amount of charge stored in the floating gate. These mechanisms need to use high voltage for charging and discharging the floating gate. In addition, the floating gate implies also to use a threshold voltage on the gate which is higher than the threshold voltage of a classical MOS transistor. For memories supplied with low voltage, as an example 1,5 volts, it can be necessary to internally generate voltage of: 2,5 to 4 volts for polarizing the gates of the floating gate transistor during reading operation; 12 to 15 volts for polarizing the source or -12 to -15 volts for polarizing the gate during an erasing operation; 10 to 12 volts for polarizing the gate and around 5 volts for polarizing the drain of the floating gate transistor during a writing operation. As well known by the person skilled in the art, these voltages mainly depend on the technology used for the manufacturing of the memory and other values can be possible.

For providing these different voltages, it is known to use one or more charge pumps into the non-volatile memories for providing these voltages to the memory cells. The figure 2 illustrates a charge pump that can be used in a non-volatile memory. The charge pump comprises pumping stages 310, a phase generator 320, a regulator circuit 330 and a tank capacitor $C_T$. The phase generator 32 provides phases signals f1 and f2 to the pumping stages 310 for "pumping" the voltage and filling of the tank capacitor $C_T$. The voltage at the terminal of the tank capacitor $C_T$ corresponds the output voltage Vout of the charge pump. The output voltage Vout is monitored by the regulator circuit 330 which provides a control signal REGOK as a function of the voltage for controlling the phase generator 320 for regulating the filling of the tank capacitor $C_T$. The charge pump comprises also an SR-latch which is set by the control signal REGOK and reset by a switching signal PUMPON. The output of the SR-latch providing a validation signal VOUTOK indicating when the output voltage corresponds to a correct voltage. The switching signal PUMPON can be provided by the memory circuit 300 each time the high voltage provided by the charge pump is needed or when the memory circuit is power on.

As an example, the pumping stages 310 can comprise a plurality of Dickson charge pump stages. Each charge pump stage comprises transistors Ta and Tb, and capacitors Ca and Cb. The transistors Ta and Tb are serially connected between and input and an output of the charge pump stage with their drain connected to their gate forming diodes passing the current from the input to the output. The capacitor Ca is connected between the source of the transistor Ca and a first phase input receiving phase signal f1. The capacitor Cb is connected between the source of the transistor Cb and a first phase input receiving phase signal f2. A first charge pump stage has its input connected to the supply voltage Vcc and a last charge pump stage has its output connected to the tank capacitor $C_T$ through an output transistor Tc mounted in diode. Other charge pump stages have their inputs connected to the output of the previous charge pump stage.

As an example, the phase generator 320 can be a ring oscillator comprising a NAND gate 321, a capacitor 322, four inverters 323 and a NOR gate 324. The four inverters 323 are serially mounted between an output of the NAND gate 321 and a first input of said NAND gate 321, forming an oscillating ring. The capacitor 322 is connected between the output of the NAND gate 321 and the ground for adjusting an oscillating frequency. An output of the NOR gate 324 is connected to a second input of the NAND gate 321. A first input of the NOR gate 324 receives the switching signal PUMPON and a second input of the NOR gate 324 is connected to the regulator circuit 330 to receive the control signal REGOK. When one of the switching signal PUMPON and the control signal REGOK is inactive at high level, the output of the NOR gate 234 is at low level which set the output of the NAND gate 321 to high level, blocking the ring oscillator. When both the switching signal PUMPON and the control signal REGOK are active at low level, the output of the NOR gate 234 is at high level which enable the NAND 321 gate to toggle like the inverters 323 and allows the ring oscillator to run. The first phase signal φ1 and the second phase signal φ2 correspond respectively to an input and an output of a same inverter 323 in such a way the first phase signal φ1 is reverse to the second phase signal φ2.

When the ring oscillator is running, the first and second phase signals φ1 and φ2 are in phase opposition. When the first phase signal φ1 is at high level and the second phase signal φ2 is at low level, the transistors Ta are passant while the transistors Tb are blocked, the capacitor Ca can be charged at same voltage than the input of the charge pump stages. When the first phase signal φ1 is at low level and the second phase signal φ2 is at high level, the transistors Ta are blocked while the transistors Tb are passant, the capacitor Cb can be charged through the transistor Tb at the voltage corresponding to the voltage of capacitor Ca connected to the same transistor Tb increased of the supply voltage. When the first and second phases signal φ1 and φ2 toggle again, the transistors Ta are passant while the transistors Tb are blocked, the output of the charge pump stages provides a voltage equal to the voltage of capacitor Cb increased of the supply voltage. Theoretically, if there no current leakage and if the tank capacitor TC has a same capacity than the capacitors Ca and Cb, the maximum voltage at the terminals of the tank capacitor $C_T$ can reach a voltage equals to Vcc*(1+2N) after 2N cycles, with N equal to the number of charge pump stages. But generally, the tank capacitor CT has a higher capacity than capacitor Ca and Cb and it exists also some current leakage, this is the reason why the number of stages is chosen to provide a theoretic voltage higher than the required voltage. The regulator circuit 330 is used in a feedback loop that switch on or off the phase generator 320 for maintaining the voltage at the terminals of the tank capacitor CT between a maximum voltage Vmax and a minimum voltage Vmin.

As an example, the regulator circuit 330 can comprises three resistors R1, R2 and R3, first and second comparators 331 and 332 and an SR-latch 333. The resistors R1, R2 and R3 are serially connected between the terminal of the tank capacitor $C_T$ and the ground for forming a voltage divider bridge of the output voltage Vout. The first and second comparators 331 and 332 are for example operational amplifiers, each having a positive input, a negative input, and an output. The negative input of the first comparator 331 is connected to a node between resistors R1 and R2 and the positive input of the first comparator 331 receives a reference voltage Vref. The positive input of the second comparator 332 is connected to a node between resistors R2 and R3 and the negative input of the second comparator 332 receives a reference voltage Vref in the range of the supply voltage, as example Vref = 1 volt. The output of the first comparator 331 is connected to the reset input R of the SR-latch 333 and the output of the second comparator 332 is connected to the set input S of the SR-latch 333. The values of the resistors are chosen to solve the following equations:

$$Vref = \frac{R2 + R3}{R1 + R2 + R3} * Vmin$$

$$Vref = \frac{R3}{R1 + R2 + R3} * Vmax$$

With such a choice of resistors, the output of the first comparator 331 is at a high state when the output voltage Vout is below the minimum voltage Vmin and at a low state when the output voltage Vout is above the minimum voltage Vmin. The output of the second comparator 332 is at a low state when the output voltage Vout is below the maximum voltage Vmax and at a high state when the output voltage Vout is above the maximum voltage Vmax. Then, the SR-latch 333 can provide a control signal REGOK which is set to an inactive high level each time the output voltage Vout is equal or below Vmin and is reset to an active low level each time the output voltage Vout is equal or above Vmax.

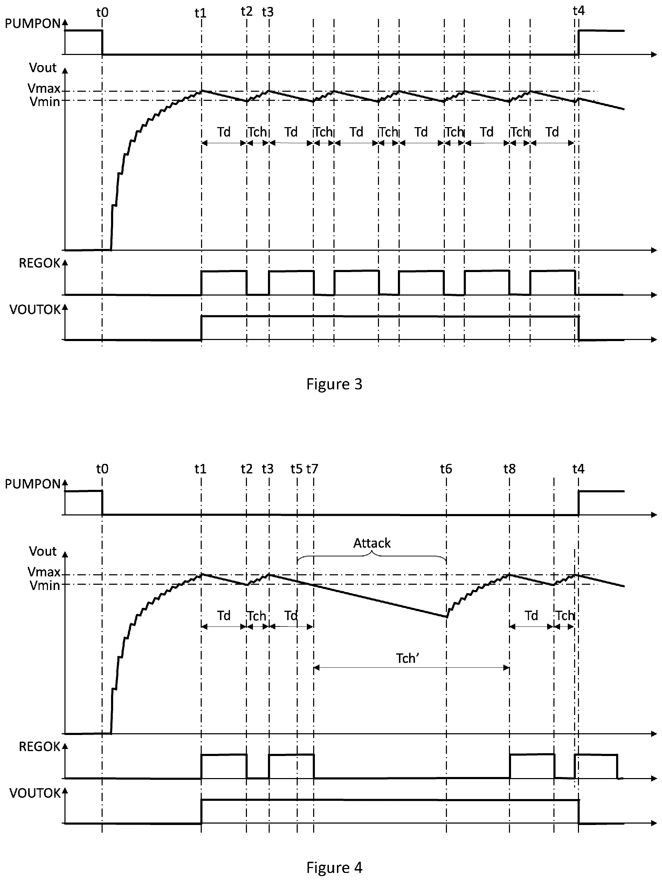

This example of charge pump is one example amongst many other charge pumps of the state of the art. Many kinds of pumping stages 310, phase generators 320 and regulator circuits 330 are well known and can be used instead of the circuits of figure 2. Whatever the type of elements forming the charge pump, the principle of regulation the charge pump is the same as illustrated on figure 3. When the switching signal PUMPON is activated at time t0 in the memory, the validation signal VOUTOK is in an inactive state, the control signal REGOK is normally in an active state, the phase generator 320 starts to oscillate and the output voltage Vout increases at each oscillation period. The voltage increasing continues till the output voltage Vout reaches at time t1 the maximum voltage Vmax turning the control signal REGOK to an inactive state, and turning the validation signal VOUTOK in an active state for indicating that the output voltage Vout can be used by the memory. At time t1, a discharging period Td begins, and the inactivation of the control signal REGOK stops the phase generator 320. The activation of validation signal VOUTOK causes the memory to draw current from the charge pump and the output voltage Vout decreases as a function of the drawn current. When the output voltage Vout reaches the minimum voltage Vmin at time t2, the regulator circuit 330 toggles the control signal REGOK to an active state in such way to reactivate the phase generator 320. The discharging period Td is finished at time t2 and a charging period Tch starts during which the pumping stages 310 increases the output voltage Vout while the memory continues to draw current from the charge pump. The charging period Tch continues till the output voltage Vout reaches the maximum current at time t3. The time t3 ends the charging period Tch, then the control signal REGOK toggles to be inactive, starting a new discharging period Td. An alternance of discharging periods Td and charging period Tch continues till time t4 wherein the switching signal PUMPON is deactivated, causing the deactivation of the validation signal VOUTOK, and the decreasing of the output voltage Vout.

As it can be seen on figure 3, the output voltage Vout is normally comprised between Vmin and Vmax when the validation signal VOUTOK is active. The memory can then perform an operation (reading, erasing, or programming) with a correct voltage.

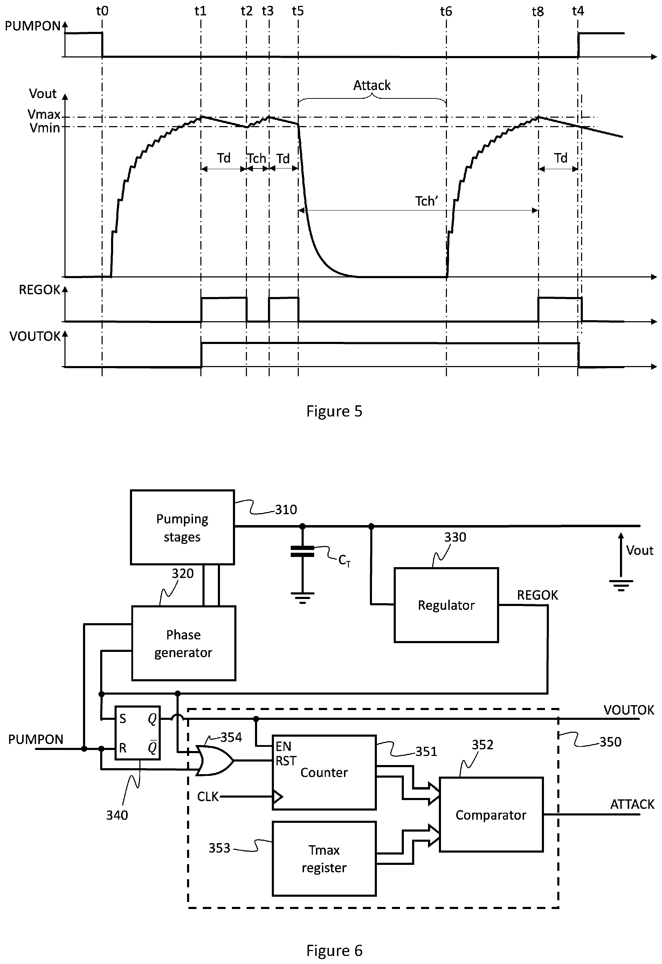

Now, on figure 4 and 5, it is illustrated the functioning of the charge pump during an attack. Two kinds of attack can be performed, the figure 4 illustrate a "light" attack acting on the phase generator 320 or on inside the pumping having a result of stopping the voltage pumping. As an example, such an attack can be made by laser on a transistor Ta shorting its drain with its substrate or by a probe one node between a transistor Ta and a transistor Tb for maintaining it at a ground voltage. Commonly the attack is synchronized on an internal signal that can be the validation signal VOUTOK in such a way to really perturbate the operation. As shown on figure 4, the switching signal PUMPON is activated at time t0 in the memory, the output voltage Vout increases till time t1 where a first discharging period Td starts. Then at t2 follows charging period Tch till t3 for starting a second discharging period Td. But during the second discharging period Td, an attack occurs at time t5 till time t6, blocking the charge pump. At time t7, the output voltage Vout crosses the minimum voltage Vmin, toggling the control signal REGOK to an active state. Nevertheless, the attack blocking the charge pump, the output voltage Vout continues to decrease till the end of the attack at time t6. The attack being finished at time t6, the output voltage Vout can increase till time T8 and then discharging period Td and charging period Tch can be performed till time t4 where the switching signal PUMPON becomes inactive.

The attack can be more aggressive, as shown on figure 5. Such an attack can be a laser attack on the transistor Tc, shorting its drain with its substrate and causing a strong discharging of the tank capacitor $C_T$. For other kinds of pumping stages, which can be reversible, a same result can occur when the attack is made on pumping stages. In term of timing, the falling of the output voltage Vout occurs immediately after the beginning of the attack at time t5. Then, the charging of the tank capacitor CT restarts at time t6 from a very low voltage, as an example the ground voltage.

Whatever the attack as shown on figure 4 or figure 5, during the activation of the charge pump, the output voltage Vout spends a long time below the minimum voltage Vmin, and the average output voltage is lower than the required voltage for performing an operation. For a reading operation, if the gate voltage of the floating gate transistors is not sufficiently high, the floating gate transistors remains blocked independently of the charge in the floating gate, making a reading error. For an erasing or a programming operation, the charges cannot be transferred to or from the floating gate transistor, and the operation is not performed.

As it can be seen on figure 4 and 5, the control signal REGOK indicates a charging period Tch' which is very long during the attack in comparison with a charging period Tch in normal condition. The invention consists in the measuring of this charging period Tch or Tch' starting from the minimum regulation voltage Vmin and stopping at the maximum regulation voltage Vmax. The measured period Tch or Tch' can then be compared to a threshold value, and an alarm signal ALARM can be provided when the measured period Tch' is higher than the threshold value. Of course, the threshold value is determined to be equal or a little bit higher than a charging period Tch in normal condition but taking into consideration the maximum current that can be drawn from the charge pump.

The figure 6 shows an example of charge pump modified according to the invention. Said charge pump comprises the pumping stages 310, the phase generator 320, the regulator circuit 330, the tank capacitor $C_T$, and the SR-latch 340 connected as previously described in relation with figure 2. According to the invention, the charge pump further comprises a detection circuit 350 receiving the control signal REGOK for measuring the charging time of a charging period Tch or Tch' and monitoring that this charging time does not exceed a threshold value Tmax. The charging time corresponds to the time elapsed since the last time the output voltage Vout was equal to the minimum regulation voltage Vmin, as an example the last time the control signal REGOK toggles to an active level. The detection circuit 350 then compares the measured charging time to the threshold value Tmax and provides an alarm signal ALARM when the measured charging time becomes higher than the threshold value Tmax. Of course, the threshold value is determined to be equal or a little bit higher than a charging period Tch in normal condition but taking into consideration a maximum current that can be drawn from the charge pump.

As an example, the detection circuit 350 can comprise a counter 351, a comparator 352, a register 353, and an OR-gate 354. The OR-gate 354 has a first input connected for receiving the switching signal PUMPON, a second input connected for receiving the control signal REGOK, and an output. The counter 351 comprises a validation input EN, a reset input RST, a clock input, and a bus output providing a counter value. The validation input EN is connected to the output of the SR-latch 340 in such a way to activate the counter 351 when the validation signal VOUTOK indicates that the output voltage Vout can be used. The input EN causes the activation of the counter 351 and of the detection circuit 350 only when the validation signal VOUTOK indicates that the output voltage reaches a maximum output value after the activation of the switching signal PUMPON. In addition, the input EN disables the counter 351 and the detection circuit 350 when the charge pump is deactivated by the switching signal PUMPON. The reset input RST is connected to the output of the OR-gate 354 in such a way to reset the counter 351 each time one of the switching or control signals PUMPON or REGOK is inactive. The clock input receives a clock signal CLK for incrementing the counter value on each positive edge of said clock signal CLK. The output provides the counter value equal to the number of active edges of the clock signal CLK since the last reset of the counter 351. The register 353 is a non-volatile register which memorizes and provides a threshold value Tmax. The comparator 352 has a first input connected to the output of the counter 351, a second input connected to the register 353, and an output providing the alarm signal ALARM in an active state when the counter value is higher than the threshold value Tmax.

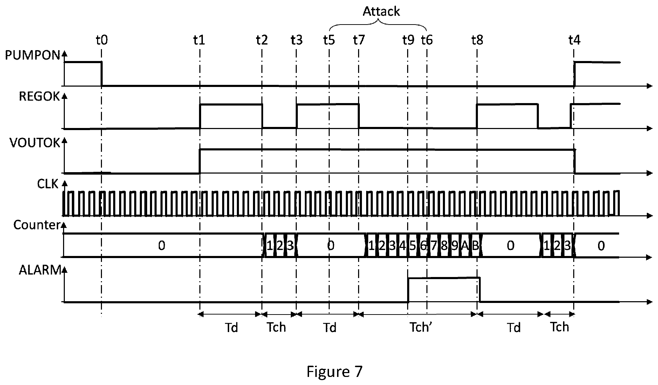

The figure 7 shows a timing chart detailing the functioning of the detection circuit 350 when an attack occurs, the figure 7 using the same time reference t0 to t8 than the figure 4. At time t0, the switching signal PUMPON is activated while the control signal REGOK is active and the validation signal VOUTOK is inactive. The output voltage Vout increases till time t1 wherein the control signal REGOK turns to an inactive state, and the validation signal VOUTOK turns in an active state allowing the counter 351 to count. A discharging period Td starts at time t1 to end at time t2 during which the control signal REGOK is inactive and maintain the counter 351 in a reset state. Then, from time t2 to time t3, the charging period Tch occurs and the control signal REGOK is active at low state allowing the counter 351 to count. During the charging period Tch, the counter value is increased by one on each positive edge of the clock signal CLK, from "1" to "3". At time t3, a new discharging period Td starts, the control signal REGOK turns into an inactive state resetting the counter 351. Then, at time t5, the attack occurs till time t6. The control signal REGOK turns in active state at time t7, from which the counter 351 starts to count. Due to the attack, the charging period Tch' is relatively long and when the counter 351 counts a value "5" which is higher than the threshold value Tmax, equal to "4" in this example, the comparator 352 activates the alarm signal ALARM. In this example, the alarm signal is activated till time t8 corresponding to the return of the output voltage Vout equals to the maximum voltage Vmax from which can start a new discharging period Td. Even if the activation of the alarm signal ALARM is not maintained, the alarm signal has been provided to the processing unit 100 through the memory controller 700 and the processing unit 100 has been interrupted for launching a rebooting sequence, ignoring the result of the operation performed in the memory 300.

The threshold value Tmax must be stored in the register 353 and should be higher than the maximum time for performing a charging period Tch, i.e. a charging period Tch corresponding to a maximum current drawn from the charge pump during the charging of the tank capacitor $C_T$ from the minimum voltage Vmin to the maximum voltage Vmax. According to a first embodiment this value can be determined by the manufacturer with a margin taking into consideration all technology variation. Such a margin can be important and for detecting a repetition of short attacks, it is preferable to have a threshold value Tmax closest to the maximum time for performing a charging period Tch.

According to a preferred embodiment, the threshold value is measured and stored in the register 353 after the manufacturing of the integrated circuit during a test step of the circuit. In this test step, a maximum current is drawn from the charge pump and the threshold value Tmax is measured as the charging period Tch corresponding to the time for charging the charge pump from the minimum regulation voltage Vmin to the maximum regulation voltage Vmax in this loading condition. The measure is made by the counter 351, the counter value being stored in the register 353 when the control signal REGOK becomes inactive at the end of the charging period under this loading condition. Alternately, it is possible to store a threshold value Tmax a little bit higher than the measured threshold value for avoiding false detection after time wear.

In such a way to prevent a neutralization of the detection circuit 350 during an attack, the detection circuit 350 is located far away from the other elements of the charge pump. The distance between the pumping stages 310 and the detection circuit can warrant that the attack on the pumping stage does not impact the detection circuit. In addition, the detection circuit 350 being far from the pumping stage 310, and such a detection circuit 350 looking like any logical circuit having not a specific pattern, it is difficult to identify and neutralizing it.

In addition, as previously indicated, the memory can comprise one or more charge pumps for providing the different high voltages. The use of a single charge pump necessitates to have a voltage divider bridge providing the different high voltages, but the variation of the drawn current can vary a lot depending on the high voltage drawn.

In such a way to have the threshold value closest to the maximum time for performing a charging period Tch, it is preferable to have one charge pump for each high voltage required in the memory. Each charge pump can have a threshold value Tmax adapted to the current drawn for its specific high voltage.

The clock signal CLK can be chosen to be at a frequency close to the frequency of the phase generator in such a way to have a counter of a reduced size. The person skilled in the art can understand that the frequency of the clock signal CLK is to be chosen according to the time counting precision and of the size of the counter 351.

The invention is not limited to the specific example disclosed in this specification. As previously indicated, different elements of the charge pump can be changed, the invention mainly consisting in the addition of the detection circuit 350. So, the invention can also apply to a charge pump providing a negative voltage. The choice of low or high level to be active signal or inactive signal can also be changed. Many other and different charge pumps can use the invention without departing from the set of claims.

## Claims

1. A charge pump comprising a tank capacitor ($C_T$) filled by at least one pumping stage (310) which is driven by a phase generator (320) controlled by a regulator circuit (330) connected to said tank capacitor ($C_T$), said regulator circuit (330) providing a control signal (REGOK) in an active state for activating the phase generator or in an inactive state for stopping the phase generator as a function of the voltage of the tank capacitor **characterized in that** the charge pump circuit further comprises a detection circuit (350) comprising:

   - a measuring circuit (351) receiving the control signal (REGOK) and providing a time value indicating the time since the last triggering of the control signal (REGOK) into the active state;
   - a comparator circuit (352) connected to the measuring circuit (351) for receiving the time value and providing an alarm signal (ALARM) when the time value is higher than a threshold value (Tmax).

2. The charge pump of claim 1, wherein said charge pump receives a switching signal (PUMPON) for activating or deactivating the charge pump, and wherein the switching signal (PUMPON) disables the detection circuit (350) when the charge pump is deactivated.

3. The charge pump of claim 1, wherein the measuring circuit (351) is a counter (351) clocked by a clock signal (CLK), said counter (351) being reset when the control signal (REGOK) is inactive and counting when the control signal (REGOK) is active.

4. The charge pump according to claims 2 and 3, wherein the switching signal (PUMPON) disables and resets the counter when the charge pump is deactivated.

5. The charge pump of one of the claims 3 to 4, wherein the detection circuit comprises a non-volatile register (353) memorizing the threshold value, and wherein the threshold value is higher than a maximum time (Tmax) for charging the tank capacitor from a minimum regulation voltage to a maximum regulation voltage in normal conditions.

6. A non-volatile memory circuit (300) comprising non-volatile memory cells that can be polarized with voltage higher than a power supply voltage, **characterized in that** said non-volatile memory circuit comprises at least one charge pump according to one of the claims 1 to 5.

7. The non-volatile memory circuit (300) of claim 6, wherein the non-volatile memory circuit comprises as many charge pumps as there are needed voltages higher than the power supply.

8. An integrated circuit comprising a non-volatile memory circuit (300) according to one of the claims 6 to 7 and at least one processing unit (100), wherein the non-volatile memory circuit is connected to the processing unit (100) for providing the alarm signal (ALARM), and wherein the processing unit (100) is configured for rebooting when the alarm signal (ALARM) is provided.

9. A method for detecting an attack of an integrated circuit comprising a non-volatile memory (300) comprising a plurality of memory cells and at least one charge pump for providing a polarization voltage to the memory cells, said polarization voltage being higher than a power supply and being regulated between a minimum regulation voltage (Vmin) and a maximum regulation voltage (Vmax), **characterized in that** the method comprises the steps of:

- measuring a charging time elapsed since last time the polarization voltage was equal to the minimum regulation voltage (Vmin),
- comparing the measured charging time with a threshold value (Tmax) and providing an alarm signal (ALARM) when the charging time is higher than the threshold value (Tmax).

10. The method of claim 9 wherein the threshold value (Tmax) is measured and stored in a non-volatile register (353) after the manufacturing of the integrated circuit during a configuration step in which the measured threshold value is equal to the time for charging the charge pump from the minimum regulation voltage (Vmin) to the maximum regulation voltage (Vmax) with a maximum current drawn from the charge pump.

11. The method according to claim 9 or 10, wherein the integrated circuit comprises a processing unit (100) connected to the non-volatile memory, and wherein the processing unit (100) is rebooted when the alarm signal (ALARM) is provided.

Figure 1

Figure 2

Figure 3

Figure 4

Figure 5

Figure 6

Figure 7

Europäisches Patentamt
European Patent Office
Office européen des brevets

## EUROPEAN SEARCH REPORT

**Application Number**

EP 24 30 5740

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2013/194868 A1 (HASHIMOTO TOSHIFUMI [JP]) 1 August 2013 (2013-08-01) * figures 1-14 * * paragraphs [0034] - [0035], [0058] - [0089] * ----- | 1-11 | INV. G11C5/14 ADD. H02M3/07 G06F21/55 |
| Y | US 2019/162797 A1 (AN SU-YONG [KR] ET AL) 30 May 2019 (2019-05-30) * figures 4B,5A-5D,10 * * paragraphs [0036], [0057], [0060] - [0072], [0103], [0108] - [0110] * ----- | 1-11 | H02M1/32 G11C7/24 G11C16/30 G11C16/22 |
| A | US 2017/040886 A1 (LEITNER JOHN H [US]) 9 February 2017 (2017-02-09) * claim 6 * ----- | 8,11 | |

**TECHNICAL FIELDS SEARCHED (IPC)**

G11C
H02M
G06F

The present search report has been drawn up for all claims

| Place of search | Date of completion of the search | Examiner |
|---|---|---|
| The Hague | 8 October 2024 | Vlachogiannakis, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5740

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | Publication date | Patent family member(s) | Publication date |
|---|---|---|---|
| US 2013194868 A1 | 01-08-2013 | JP 2013157050 A<br>US 2013194868 A1 | 15-08-2013<br>01-08-2013 |
| US 2019162797 A1 | 30-05-2019 | CN 109842171 A<br>KR 20190062032 A<br>US 2019162797 A1 | 04-06-2019<br>05-06-2019<br>30-05-2019 |
| US 2017040886 A1 | 09-02-2017 | NONE | |

EPO FORM P0459

For more details about this annex : see Official Journal of the European Patent Office, No. 12/82